# EUROPEAN PATENT APPLICATION

(11) **EP 4 656 308 A1**
(43) Date of publication of application: **03.12.2025**
(21) Application number: 24875758.5
(22) Date of filing: 21.11.2024
(51) Int. Cl.: B21J 9/02, B21D 39/00, B21K 1/05, B60B 35/14, F16C 19/18, F16C 33/64, F16C 35/063, F16C 43/04

(54) **CRIMPING JOINING METHOD, METHOD FOR MANUFACTURING HUB UNIT BEARING, METHOD FOR MANUFACTURING VEHICLE, METHOD FOR MANUFACTURING MACHINE DEVICE, AND CRIMPING DEVICE**

(30) Priority: 05.04.2024 JP 2024061434
(71) Applicant: NSK Ltd., Tokyo 141-8560 (JP)
(72) Inventor: NAKAMURA Seiji, Fujisawa-shi, Kanagawa 2518501 (JP); MIZUSHIMA Yuuki, Fujisawa-shi, Kanagawa 2518501 (JP)
(74) Representative: Grünecker Patent- und Rechtsanwälte PartG mbB
(86) International application number: PCT/JP2024/041358
(87) International publication number: WO 2025/210955

(57) **Abstract**

A step of forming a staked portion includes deforming a first member (17a) using a first relative rotation about a reference axis between a first pressing die (39) and a workpiece (90), and further deforming the first member (17a) using a second relative rotation about the reference axis between a second pressing die (39) and the workpiece (90). In the first relative rotation, a central axis of the first pressing die (39) is inclined at a first inclination angle (θ₁) with respect to the reference axis, and in the second relative rotation, a central axis of the second pressing die (39) is inclined at a second inclination angle (θ₂) different from the first inclination angle with respect to the reference axis.

## Description

### TECHNICAL FIELD

The present invention relates to a staking method, a method for manufacturing a hub unit bearing, a method for manufacturing a vehicle, a method for manufacturing a mechanical device, and a staking device.

Priority is claimed on Japanese Patent Application No. 2024-061434, filed April 5, 2024, the content of which is incorporated herein by reference.

### BACKGROUND ART

A hub unit bearing is known as an example of a staked assembly in which a first member and a second member are assembled together in an axial direction. Wheels and braking rotors of an automobile are supported by hub unit bearings to be rotatable relative to a suspension device. The hub unit bearing includes an outer ring having a double-row outer ring raceway on an inner surface thereof, a hub having a double-row inner ring raceway on an outer surface thereof, and a plurality of rolling elements disposed to be rollable between the double-row outer ring raceway and the double-row inner ring raceway.

The hub includes an inner ring and a hub body (a hub ring). In a state in which an end surface on the outer side in an axial direction (the outer side in a width direction of a vehicle body when the hub unit bearing is mounted in the automobile) is in contact with a stepped surface provided at an intermediate portion of the hub body in the axial direction and facing inward in the axial direction, the inner ring is press-fitted onto a fitting shaft portion provided on an inner portion of the hub body in the axial direction (an inner portion of the vehicle body in the width direction when the hub unit bearing is mounted in the automobile). In this state, an end surface of the inner ring on the inner side in the axial direction is pressed by a staked portion formed by plastically deforming radially outward a cylindrical portion of the fitting shaft portion that protrudes axially inward beyond the end surface of the inner ring on the inner side in the axial direction. Thus, the inner ring and the hub body are joined and fixed together, and a preload is applied to the rolling elements.

Japanese Patent Application, Publication No. 2015-77616 describes an orbital staking processing method in which a pressing die (a metal mold) supported to be rotatable about a central axis inclined with respect to a reference axis disposed coaxially with a central axis of the hub body is rotated about the reference axis while pressing a tip end portion of the pressing die against a cylindrical portion, thereby plastically deforming the cylindrical portion radially outward to form a staked portion in order to join a hub body and an inner ring. In the orbital staking processing method described in JP 2015-77616 A, an orbital angle which is an inclination angle of the central axis of the pressing die with respect to the reference axis is set to 15° or more and 30° or less, thereby keeping a processing load small.

### Citation List

### Patent Document

Patent Document 1: Japanese Patent Application, Publication No. 2015-77616

### SUMMARY OF INVENTION

### Technical Problem

In the orbital staking processing method described in JP 2015-77616 A, the orbital angle is set to be relatively large, at 15° or more and 30° or less. As a result, in an initial stage of the processing, a radial force applied to the hub body from the pressing die may cause the hub body to vibrate (rettle), which may result in a decrease in processing accuracy.

By making the orbital angle relatively small, such as 5°, it is possible to prevent the hub body from vibrating in the initial stages of the processing, but since a contact area between the hub body and the pressing die becomes large, a processing load needs to be increased. Therefore, this may cause a problem that the inner ring is likely to expand radially outward, and circumferential tensile stress (hoop stress) is likely to occur in the inner ring.

This problem tends to become more pronounced when, after the staked portion is formed, a face spline in which concave portions and convex portions are disposed alternately in a circumferential direction is formed on an axial end surface of the staked portion by forging, or when an axial thickness of a portion of the inner ring that deviates axially inward from an inner ring raceway is small.

An object of the present invention is to provide a staking method, a method for manufacturing a hub unit bearing, a method for manufacturing a vehicle, a method for manufacturing a mechanical device, and a staking device that are advantageous for reducing manufacturing costs and/or improving product quality.

### Solution to Problem

In one aspect of the present invention, a staking method includes setting a workpiece, in which a first member and a second member are assembled in an axial direction, along a reference axis, and forming a staked portion in the first member, the forming of the staked portion including deforming the first member using a first relative rotation about the reference axis between a first pressing die and the workpiece, and further deforming the first member using a second relative rotation about the reference axis between a second pressing die and the workpiece, wherein in the first relative rotation, a central axis of the first pressing die is inclined at a first inclination angle with respect to the reference axis, and in the second relative rotation, a central axis of the second pressing die is inclined at a second inclination angle different from the first inclination angle with respect to the reference axis.

In another aspect of the present invention, a method for manufacturing a vehicle includes manufacturing a hub unit bearing using the manufacturing method, and assembling a vehicle using the hub unit bearing.

In yet another aspect of the present invention, a method for manufacturing a mechanical device includes manufacturing a staked assembly using the staking method, and assembling a mechanical device using the staked assembly.

In still another aspect of the present invention, a staking device includes a holder configured to support a workpiece, a pressing die having a central axis, a first mechanism configured to perform relative rotation between the workpiece and the pressing die, of which the central axis is inclined with respect to the reference axis, about the reference axis, and a second mechanism configured to change an inclination angle of the central axis with respect to the reference axis, wherein in a first relative rotation, the central axis of the pressing die is inclined at a first inclination angle with respect to the reference axis, and in a second relative rotation, the central axis of the pressing die is inclined at a second inclination angle different from the first inclination angle with respect to the reference axis.

### Advantageous Effects of Invention

The aspects of the present invention are advantageous in reducing manufacturing costs and/or improving product quality.

### BRIEF DESCRIPTION OF DRAWINGS

[FIG. 1] FIG. 1 is a cross-sectional view representing an example of a wheel drive unit equipped with a hub unit bearing.
[FIG. 2] FIG. 2 is a cross-sectional view schematically representing a staking device.
[FIG. 3] Part (A) of FIG. 3 is a cross-sectional view representing a part of the staking device, part (B) is a view representing a state in which an orbital angle is changed from that of part (A).
[FIG. 4] Parts (A) and (B) of FIG. 4 are diagrams representing a mechanism for changing the orbital angle, wherein part (a) is a diagram seen in an axial direction, and part (b) is a perspective view.
[FIG. 5] Parts (A) to (E) of FIG. 5 are schematic cross-sectional views representing a process of a staking method in order.
[FIG. 6] FIG. 6 is a partial schematic diagram representing a vehicle equipped with the hub unit bearing.

### DESCRIPTION OF EMBODIMENTS

Hereinafter, an embodiment of the present invention will be described with reference to the drawings.

In one embodiment, a staking method includes fitting a second member having a tubular shape and formed of a metal onto a first member having a cylindrical portion and formed of a metal at one end portion in an axial direction. Then, one end portion of the cylindrical portion in the axial direction is plastically deformed to form a staked portion. The first member and the second member are joined together by preventing the second member from being displaced to one side in the axial direction relative to the first member. The staking method and a staking device are widely applicable to manufacturing of mechanical devices, vehicles, or components thereof that include two metallic members joined by the staked portion.

In one embodiment, the staking method and the staking device are applied to the manufacture of a hub unit bearing that constitutes a vehicle. In the following description, there are some differences in the shape of details between the drawings, but the parts with the same reference numerals have the same contents and functions.

The present disclosure may be applied to both manufacturing of a hub unit bearing for a driving wheel in which a central hole passing through a center portion of a hub in the axial direction is provided, and manufacturing of a hub unit bearing for a driven wheel in which the hub is constructed as a solid body.

Furthermore, the present disclosure may be applied to both manufacturing of a hub unit bearing having a face spline on an end surface of the staked portion in the axial direction and manufacturing of a hub unit bearing not having a face spline.

Additionally, the present disclosure may be applied to both manufacturing of a so-called 2.5th generation hub unit bearings and manufacturing of so-called third generation hub unit bearings. A hub of a 2.5th generation hub unit bearing includes a shaft member and two inner rings each having an inner ring raceway on an outer circumferential surface thereof and fitted onto the shaft member. In the 2.5th generation hub unit bearing, a hub body is configured of a shaft member and an inner ring on the outer side in the axial direction of two inner rings. A hub of a third generation hub unit bearing includes an inner ring having at least the innermost inner ring raceway in the axial direction among a plurality of inner ring raceways on an outer circumferential surface thereof, and a hub body having at least the outermost inner ring raceway in the axial direction among the plurality of inner ring raceways and a fitting shaft portion onto which the inner ring is fitted.

In one example, the present disclosure is applied to manufacturing of a so-called third generation hub unit bearing for a driving wheel, which has a face spline on an end surface of the staked portion in the axial direction.

### [Structure of wheel drive unit]

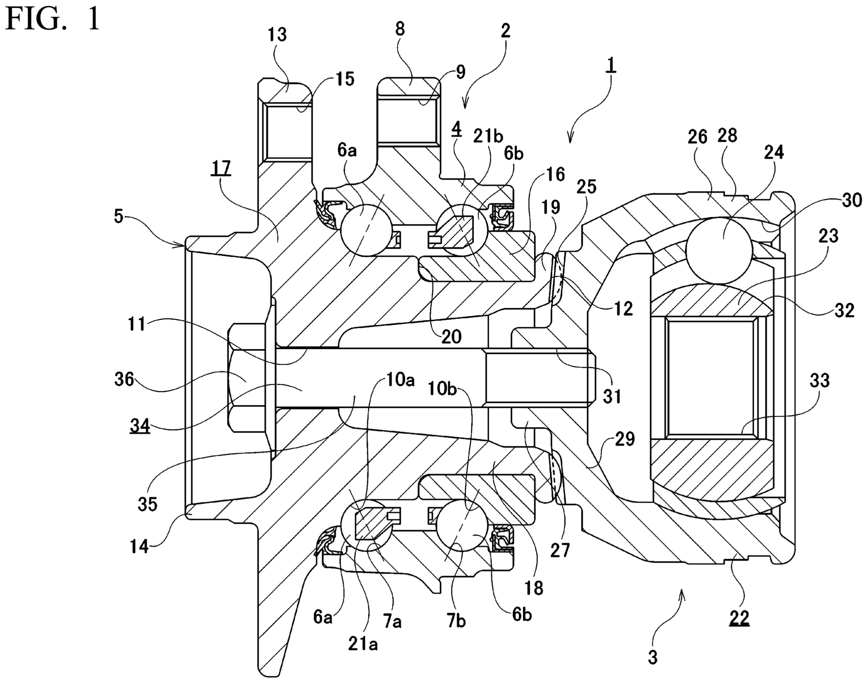

FIG. 1 shows a wheel drive unit 1 including a hub unit bearing 2. The wheel drive unit 1 includes the hub unit bearing 2 and a constant velocity joint 3.

In the following description, an axial direction, a radial direction, and a circumferential direction in relation to the wheel drive unit 1 respectively refer to an axial direction, a radial direction, and a circumferential direction of a hub 5 of the hub unit bearing 2, unless otherwise specified. The axial direction, the radial direction, and the circumferential direction of the hub 5 respectively correspond to an axial direction, a radial direction, and a circumferential direction of an outer ring 4 of the hub unit bearing 2, and also respectively correspond to an axial direction, a radial direction, and a circumferential direction of the constant velocity joint 3. In addition, the outer side in the axial direction refers to the outer side in a width direction of a vehicle body when the wheel drive unit 1 is assembled to the automobile, and the inner side in the axial direction refers to the inner side in the width direction of the vehicle body when the wheel drive unit 1 is assembled to the automobile.

### <Structure of hub unit bearing>

In one example, the hub unit bearing 2 includes an outer ring 4, a hub 5, and a plurality of rolling elements 6a and 6b.

The outer ring 4 has a hollow shape and has a plurality of outer ring raceways 7a and 7b on an inner circumferential surface thereof.

In this example, the plurality of outer ring raceways 7a and 7b are configured as double-row (two-row) outer ring raceways 7a and 7b.

Each of the outer ring raceways 7a and 7b has a generatrix shape corresponding to shapes of the plurality of rolling elements 6a and 6b. When the plurality of rolling elements 6a and 6b are configured of balls, each of the outer ring raceways 7a and 7b has a generatrix shape of a circular arc. When the circular arc rolling elements 6a and 6b are configured of tapered rollers, the outer ring raceways 7a and 7b have a linear generatrix shape inclined with respect to a central axis of the outer ring 4.

In the hub unit bearing 2 of this example, the plurality of rolling elements 6a and 6b are configured of balls. Therefore, each of the outer ring raceways 7a and 7b has a generatrix shape of a circular arc.

The outer ring 4 has a stationary flange 8 that protrudes outward in the radial direction, at an axially intermediate portion thereof. The stationary flange 8 has flange-side support holes 9 passing therethrough in the axial direction at a plurality of locations in the circumferential direction on a radially intermediate portion.

The outer ring 4 is supported by and fixed to a knuckle by inserting a support bolt (not shown) into one of the flange-side support holes 9 and knuckle-side support hole provided in the knuckle of a suspension device and screwing it into the other support hole.

The hub 5 is disposed radially inside the outer ring 4 and coaxially with the outer ring 4. The hub 5 has a plurality of inner ring raceways 10a and 10b on an outer circumferential surface thereof.

In this example, the plurality of inner ring raceways 10a and 10b are configured of double-row (two-row) inner ring raceways 10a and 10b.

Each of the inner ring raceways 10a and 10b has a generatrix shape corresponding to shapes of the plurality of rolling elements 6a and 6b. When the plurality of rolling elements 6a and 6b are configured of balls, each of the inner ring raceways 10a and 10b has a generatrix shape of a circular arc. When the plurality of rolling elements 6a and 6b are configured of tapered rollers, the inner ring raceways 10a and 10b have a linear generatrix shape inclined with respect to the central axis of the hub 5.

In the hub unit bearing 2 of this example, the plurality of rolling elements 6a and 6b are configured of balls. Therefore, each of the inner ring raceways 10a and 10b has a generatrix shape of a circular arc.

The hub 5 further has a central hole 11 and a hub-side face spline 12.

The central hole 11 is provided to pass through the center portion of the hub 5 in the axial direction.

The hub-side face spline 12 is provided on an end surface of the hub 5 on the inner side in the axial direction, and is configured by alternately arranging concave portions and convex portions in the circumferential direction. Specifically, the hub-side face spline 12 is provided on an end surface of a staked portion 19 on the inner side in the axial direction that is provided on an end portion of the hub body 17 on the inner side in the axial direction. In addition, the hub-side face spline 12 is configured by arranging a plurality of teeth (convex portions), which protrude axially inward, at equal intervals in the circumferential direction. The teeth that constitute the hub-side face spline 12 are disposed radially.

In this example, the hub 5 has a rotating flange 13 that protrudes radially outward at a portion that protrudes axially outward beyond the outer ring 4, and also has a cylindrical pilot portion 14 at an end portion thereof on the outer side in the axial direction.

The rotating flange 13 has mounting holes 15 passing therethrough in the axial direction at a plurality of locations in the circumferential direction on a radially intermediate portion. Each of the mounting holes 15 is configured as a press-fit hole or a screw hole.

When each of the mounting holes 15 is configured as a press-fit hole, a stud is press-fitted into each of the mounting holes 15 from the inner side in the axial direction. The pilot portion 14 is inserted into a central hole provided in a center portion of a braking rotor such as a brake disc and a wheel of a vehicle. Studs are inserted through through holes provided at a plurality of locations in the circumferential direction on each of the radially intermediate portions. A wheel or the like is joined and fixed to the rotating flange 13 by screwing a hub nut onto a tip end portion of the stud.

When each of the mounting holes 15 is configured of a screw hole, the pilot portion 14 is inserted into a central hole provided in the center portion of each of a braking rotor such as a brake disc and a wheel of a vehicle. In addition, a wheel or the like is joined and fixed to the rotating flange 13 by hub bolts inserted through through holes provided at the plurality of locations in the circumferential direction on each of the radially intermediate portion and screwed into the mounting holes 15 from the outer side in the axial direction.

The hub 5 includes an inner ring 16 and a hub body 17.

The inner ring 16 is formed into a cylindrical shape and is made of a hard metal such as bearing steel. The inner ring 16 has, on an outer circumferential surface thereof, at least the innermost inner ring raceway 10b in the axial direction among the plurality of inner ring raceways 10a and 10b. In this example, the inner ring 16 has, at an axially intermediate portion of an outer circumferential surface thereof, the inner ring raceway 10b on the inner side in the axial direction, which is one of the double-row inner ring raceways 10a and 10b.

The hub body 17 is made of a hard metal such as medium carbon steel. The hub body 17 has at least the innermost inner ring raceway 10b in the axial direction among the plurality of inner ring raceways 10a and 10b on an outer circumferential surface thereof, a fitting shaft portion 18 on which the inner ring 16 is fitted, and a staked portion 19 provided at an end portion thereof on the inner side in the axial direction and pressing an end surface on the inner side in the axial direction of the inner ring 16.

In this example, the hub body 17 has, at an axially intermediate portion of an outer circumferential surface thereof, the inner ring raceway 10a on the outer side in the axial direction among the double-row inner ring raceways 10a and 10b.

The fitting shaft portion 18 has a cylindrical outer circumferential surface provided at a portion thereof located axially inward with respect to the inner ring raceway 10a on the outer side in the axial direction and of which an outer diameter does not change in the axial direction. A portion of the outer circumferential surface of the hub body 17 adjacent to the axially inner side of the inner ring raceway 10a on the outer side in the axial direction and the outer circumferential surface of the fitting shaft portion 18 are connected by a stepped surface 20 that faces inward in the axial direction.

The staked portion 19 extends radially outward from an end portion of the fitting shaft portion 18 on the inner side in the axial direction. The hub-side face spline 12 is provided on an end surface of the staked portion 19 on the inner side in the axial direction.

In this example, the hub body 17 has the rotating flange 13 at a portion thereof located outward in the axial direction with respect to the inner ring raceway 10a on the outer side in the axial direction, and has the pilot portion 14 at an end portion on the outer side in the axial direction.

The inner ring 16 is fitted onto the fitting shaft portion 18 of the hub body 17 and is sandwiched between the stepped surface 20 and the staked portion 19 of the hub body 17 from both sides in the axial direction. Thus, the hub 5 is formed by joining the inner ring 16 and the hub body 17, and a preload is applied to the rolling elements 6a and 6b.

The plurality of rolling elements 6a and 6b are disposed in rows between the plurality of outer ring raceways 7a and 7b and the plurality of inner ring raceways 10a and 10b to be rollable, and a preload is applied thereto.

Each of the rolling elements 6a and 6b is made of a hard metal such as bearing steel or ceramics.

In addition, each of the rolling elements 6a and 6b is configured of a ball or a tapered roller. In this example, each of the rolling elements 6a and 6b is configured of a ball.

The rolling elements 6a and 6b are disposed at equal intervals in the circumferential direction using cages 21a and 21b having an annular shape.

The hub unit bearing 2 of this example has an equal diameter PCD type structure in which a pitch circle diameter of the rolling elements 6a in the row on the outer side in the axial direction is equal to a pitch circle diameter of the rolling elements 6b in the row on the inner side in the axial direction. In another example, it may also be intended for hub unit bearings of different diameter PCD type in which the pitch circle diameter of the rolling elements 6a in the row on the outer side in the axial direction is larger or smaller than the pitch circle diameter of the rolling elements 6b in the row on the inner side in the axial direction.

### <Structure of constant velocity joint>

The constant velocity joint includes a joint outer ring 22, a joint inner ring 23, and a plurality of balls 24.

The joint outer ring 22 has, on an outer surface thereof in the axial direction, a joint-side face spline 25 which engages with the hub-side face spline 12 of the hub 5.

The joint outer ring 22 has a substantially bowl-shaped mouth portion 26 and a cylindrical portion 27.

The mouth portion 26 has a substantially cylindrical circumferential wall portion 28 and a substantially hollow circular side wall portion 29 that is bent radially inward from an end portion of the circumferential wall portion 28 on the outer side in the axial direction.

An inner circumferential surface of the circumferential wall portion 28 is configured of a partially spherical concave surface. The circumferential wall portion 28 has outer diameter-side engagement grooves 30, which extends in the axial direction, at a plurality of locations in the circumferential direction on the inner circumferential surface.

The side wall portion 29 has, at a radially intermediate portion of the outer surface thereof in the axial direction, the joint-side face spline 25 formed by arranging concave portions and convex portions alternately in the circumferential direction.

The cylindrical portion 27 is bent axially outward from an end portion of the side wall portion 29 on the inner side in the radial direction. The cylindrical portion 27 has a female thread portion 31 on an inner circumferential surface thereof.

The joint inner ring 23 has an outer circumferential surface having a partially convex and spherical shape, and has inner diameter-side engagement grooves 32 that extend in the axial direction at a plurality of locations in the circumferential direction on the outer circumferential surface. The joint inner ring 23 also has, at a center portion thereof, a spline hole 33 that passes therethrough in the axial direction. A splined shaft portion provided at a tip end portion of a drive shaft (not shown) is spline-engaged with the spline hole 33.

Each of the balls 24 is disposed between the outer diameter-side engagement groove 30 and the inner diameter-side engagement groove 32 to be rollable along the outer diameter-side engagement groove 30 and the inner diameter-side engagement groove 32.

The hub 5 of the hub unit bearing 2 and the joint outer ring 22 of the constant velocity joint 3 are joined and fixed by engaging the hub-side face spline 12 with the joint-side face spline 25, screwing a shaft portion 35 of a bolt 34, which is inserted into the central hole 11 from the outer side in the axial direction, into the female thread portion 31, and sandwiching the hub 5 from both sides in the axial direction between a head portion 36 of the bolt 34 and the joint outer ring 22.

### [Method for manufacturing hub unit bearing]

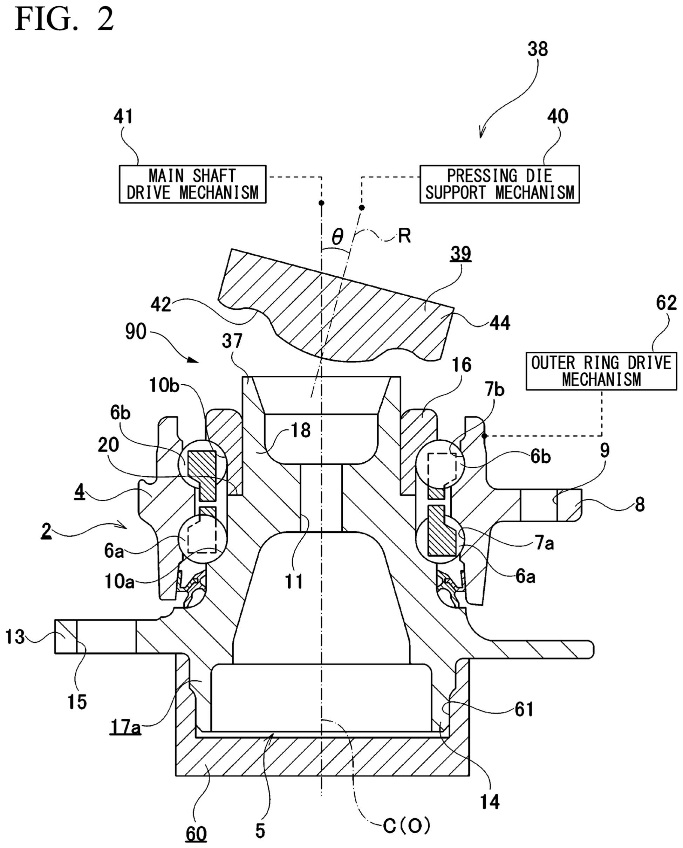

When the hub unit bearing 2 is manufactured, as shown in FIG. 2, the outer ring 4 and the plurality of rolling elements 6a and 6b are disposed around the hub body 17a before the staked portion 19a is formed. The hub body 17a before the staked portion 19a is formed has a cylindrical portion 37 at an end portion (a first end portion) thereof on the inner side in the axial direction adjacent to the inner side of the fitting shaft portion 18 in the axial direction. The cylindrical portion 37 has an outer diameter that is equal to an outer diameter of the fitting shaft portion 18 and does not change in the axial direction. In other words, an outer circumferential surface of the fitting shaft portion 18 and an outer circumferential surface of the cylindrical portion 37 are formed by a single cylindrical surface.

The procedure for arranging the outer ring 4 and the plurality of rolling elements 6a and 6b around the hub body 17a is not particularly limited, and any procedure can be used as long as no contradiction occurs.

For example, first, the plurality of rolling elements 6a and 6b are inserted into pockets of two cages 21a and 21b, and the plurality of rolling elements 6a and 6b are held in rows by the respective cages 21a and 21b. Next, the rolling elements 6a and 6b for each row held by the two cages 21a and 21b are held inside the outer ring raceways 7a and 7b of the outer ring 4 in the radial direction. Next, the hub body 17a is inserted from the outer side in the axial direction into the inner side of the outer ring 4, the plurality of rolling elements 6a and 6b, and the cages 21a and 21b, which are assembled together, in the radial direction. Then, the inner ring 16 is fitted onto the fitting shaft portion 18 of the hub body 17a. In other words, the inner ring 16 is inserted between the rolling elements 6b in row on the inner side in the axial direction and the fitting shaft portion 18. The cylindrical portion 37 of the hub body 17a is plastically deformed radially outward to form the staked portion 19, thereby joining the inner ring 16 and the hub body 17. Thus, the hub unit bearing 2 is obtained by forming the hub 5.

In this example, the cylindrical portion 37 of the hub body 17a is plastically deformed radially outward to form the staked portion 19, thereby joining the inner ring 16 and the hub body 17(17a). In this example, the hub body 17(17a) corresponds to the first member, and the inner ring 16 corresponds to the second member. Also, the inner side of the hub unit bearing 2 in the axial direction corresponds to one side in the axial direction, and the outer side of the hub unit bearing 2 in the axial direction corresponds to the other side in the axial direction.

In one embodiment, a staking method joins the inner ring 16 and the hub body 17(17a). First, an external fitting step is performed in which the inner ring 16, which is the second member, is fitted onto the fitting shaft portion 18 of the hub body 17a before the staked portion 19a, which is the first member, is formed. In this example, the outer ring 4 and the plurality of rolling elements 6a and 6b are disposed around the hub body 17a, and then the inner ring 16 is inserted between the rolling elements 6b in row on the inner side in the axial direction and the fitting shaft portion 18. A workpiece (a target object) 90 in which the hub body (the first member) 17(17a) and the inner ring (the second member) 16 are assembled in the axial direction is set along a reference axis C.

Next, a first molding step is performed in which the cylindrical portion 37 is plastically deformed. In the first molding step, a first pressing die 39 supported to be rotatable about a first rotation axis R which is a central axis thereof rotates about the reference axis (the central axis) C of the hub body 17a while being pressed against the cylindrical portion 37 in a state in which the first rotation axis R is inclined at a predetermined first angle (a first inclination angle) θ₁ with respect to the reference axis C of the hub body 17a. In the first molding step, a portion (the cylindrical portion 37) of the hub body 17a is plastically deformed using a first relative rotation about the reference axis C between the first pressing die 39 and the workpiece 90 (the hub body 17a). In the first relative rotation, the central axis of the first pressing die 39 is inclined with respect to the reference axis C at the first inclination angle.

After the first molding step, a second molding step is performed in which the cylindrical portion 37 is further plastically deformed. In the second molding step, a second pressing die 39 supported to be rotatable about a second rotation axis R which is a central axis thereof rotates around the reference axis C of the hub body 17a while being pressed against the cylindrical portion 37 in a state in which the second rotation axis R is inclined at a predetermined second angle (a second inclination angle) θ₂ that is greater than the first angle θ₁ with respect to the reference axis C of the hub body 17a. In the second molding step, the portion (the cylindrical portion 37) of the hub body 17a is further plastically deformed using a second relative rotation about the reference axis C between the second pressing die 39 and the workpiece 90 (the hub body 17a). In the second relative rotation, the central axis of the second pressing die 39 is inclined with respect to the reference axis C at the second inclination angle θ₂ different from the first inclination angle θ₁. In this example, θ₂ is larger than θ₁ (θ₂>θ₁). Due to the first and second molding steps, the staked portion 19 that presses the end surface of the inner ring 16 on the inner side in the axial direction is formed.

In this example, the same pressing die 39 is used as the first pressing die and the second pressing die. The first molding step and the second molding step are performed using the same staking device 38.

In another example, the first and second pressing dies may be different (separate pressing dies). In this case, a shape of the first pressing die and a shape of the second pressing die may be substantially the same as each other, or may be different from each other.

### <Structure of staking device>

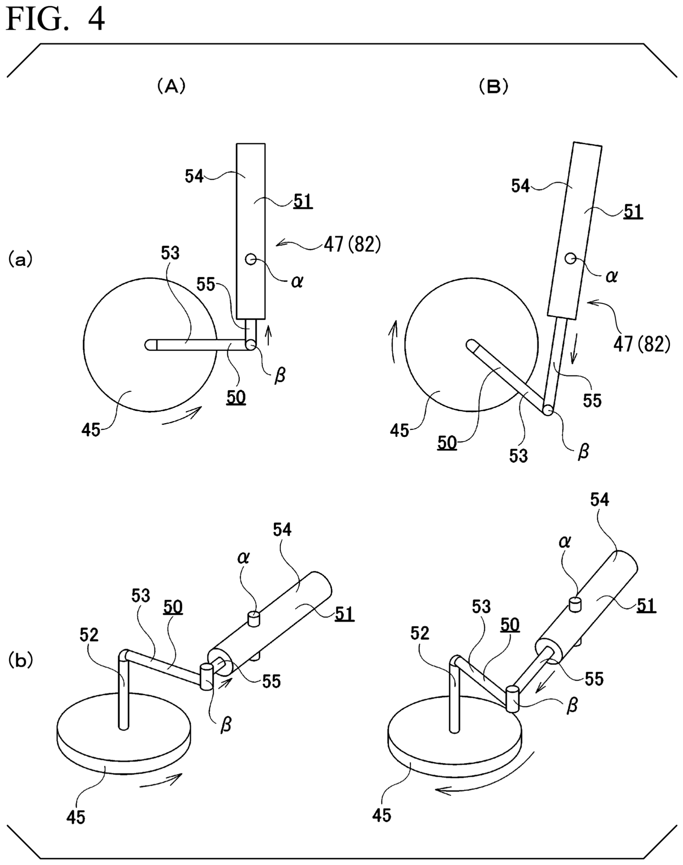

Next, the staking device 38 will be described using FIGS. 2 to 4. The staking device 38 includes a pressing die 39, a pressing die support mechanism 40, a main shaft drive mechanism (a first mechanism) 41, and an inclination adjustment mechanism (a orbital angle changing actuator, a second mechanism) 47.

The pressing die 39 is a member that is pressed against the cylindrical portion 37 of the hub body 17a, before the staked portion 19 is formed, to plastically deform the cylindrical portion 37, thereby forming the staked portion 19. The pressing die 39 is supported by the pressing die support mechanism 40 so that an orbital angle θ, which is an inclination angle of a rotation axis R, which is the central axis of the pressing die 39, with respect to the reference axis C can be adjusted and the pressing die 39 can rotate around the rotation axis R.

The reference axis C is an axis that is disposed coaxially with the hub unit bearing 2 (the hub 5) which is a workpiece. An extension direction of the reference axis C is not particularly limited, and may be any direction such as a vertical direction (an up-down direction), a horizontal direction, or the like. In this example, the reference axis C extends in the vertical direction. Also, in this example, the hub unit bearing 2 which is a workpiece is set in the staking device 38 in a state in which a central axis O thereof coincides with the reference axis C, the inner side thereof in the axial direction faces upward, and the outer side thereof in the axial direction faces downward.

The pressing die 39 has a processing surface portion 42 at a tip end portion (a lower end portion in FIGS. 2 to 3) thereof that has a substantially arc-shaped cross section and is formed in an annular shape centered on the rotation axis R. The processing surface portion 42 has a concave profile.

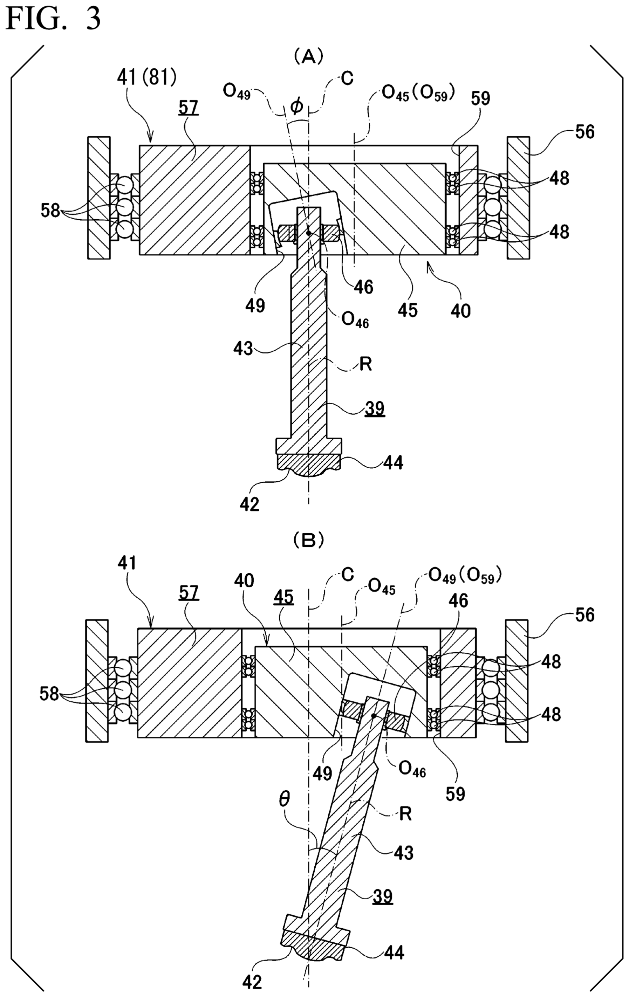

In this example, the pressing die 39 includes a shaft member 43 and a pressing die body 44, as shown in FIGS. 3A and 3B.

The shaft member 43 has a stepped cylindrical shape.

The pressing die body 44 is supported and fixed to a tip end portion (a lower end portion in FIGS. 3A and 3B) of the shaft member 43. The processing surface portion 42 is provided on an end surface of the pressing die body 44 on the tip end side.

The pressing die support mechanism 40 supports the pressing die 39 so that the orbital angle θ can be adjusted and the pressing die 39 can rotate about the rotation axis R. The pressing die support mechanism 40 makes it possible to change the orbital angle θ of the pressing die 39 while the staked portion 19 is being processed, without removing the hub unit bearing 2 from the staking device 38. In this example, the pressing die support mechanism 40 includes a pressing die supporting block 45, an aligning bearing 46, and an orbital angle changing actuator 47.

The pressing die supporting block 45 is supported to be rotatable about an orbital angle changing axis O₄₅ which is a central axis of the pressing die supporting block 45 and is disposed parallel to the reference axis C. In this example, the pressing die supporting block 45 has a cylindrical shape, and is rotatably supported by a plurality of radial bearings 48 inside a block holding recessed portion 59 of a main shaft 57 that constitutes the main shaft drive mechanism 41.

The pressing die supporting block 45 has a pressing die supporting recessed portion 49 formed in a direction in which it is inclined with respect to the reference axis C (the orbital angle changing axis O₄₅). The pressing die supporting recessed portion 49 has a cylindrical inner circumferential surface of which an inner diameter does not change in the axial direction of the pressing die supporting recessed portion 49. An inclination angle φ (refer to FIG. 3A) of the central axis O₄₉ of the pressing die supporting recessed portion 49 with respect to the orbital angle changing axis O₄₅ (the reference axis C) can be set to be greater than or equal to 0° and less than or equal to 30°. In this example, the inclination angle φ is about 15°. The above values are merely examples and the present invention is not limited thereto.

Further, the pressing die supporting recessed portion 49 is formed so that a bearing center O₄₆ of the aligning bearing 46 disposed inside the pressing die supporting recessed portion 49 is located at a position that deviates in the radial direction from the orbital angle changing axis O₄₅.

The pressing die supporting recessed portion 49 opens at least on one of side surfaces on the both axial sides of the pressing die supporting block 45 that is closer to the hub unit bearing 2, which is the workpiece, set in the staking device 38. In this example, the pressing die supporting recessed portion 49 is configured of a bottomed hole that opens only to a lower side surface of the pressing die supporting block 45. In another example, the pressing die supporting recessed portion may be configured of a through hole that opens on both axial side surfaces of the pressing die supporting block.

The aligning bearing 46 is disposed between the pressing die 39 and the pressing die supporting recessed portion 49. Thus, the pressing die 39 is supported to be rotatable about the rotation axis R with respect to the pressing die supporting block 45. In the pressing die support mechanism 40, the pressing die 39 is rotatable about the rotation axis (the central axis) R. In this example, the aligning bearing 46 is disposed between a base end portion of the pressing die 39 (an upper end portion in FIGS. 3A and 3B) and the pressing die supporting recessed portion 49.

The aligning bearing 46 is not particularly limited as long as it can tolerate a certain degree of inclination of the central axis of the inner ring with respect to the central axis of the outer ring, and may be configured of a self-aligning ball bearing, a self-aligning roller bearing, a spherical sliding bearing, or the like. In this example, the aligning bearing 46 is configured of a spherical sliding bearing.

The orbital angle changing actuator 47 rotates the pressing die supporting block 45 about the orbital angle changing axis O₄₅. Specifically, the orbital angle changing actuator 47 uses an actuator 82 such as an electric motor or a hydraulic cylinder as a drive source (a second drive source) to rotate the pressing die supporting block 45 about the orbital angle changing axis O₄₅. Thus, in a cross section relative to a virtual plane including the reference axis C and the rotation axis R, the orbital angle θ can be adjusted by changing a distance in the radial direction between the bearing center O₄₆ (a center of curvature of the outer ring raceway of the aligning bearing 46), which supports the pressing die 39 to be rotatable about the rotation axis R, and the reference axis C.

In this example, the orbital angle changing actuator 47 includes a link member 50 and an expansion and contraction mechanism 51.

The link member 50 has a first arm portion 52 of which a lower end portion is supported and fixed to a center portion of an upper surface of the pressing die supporting block 45 and which extends in the axial direction of the pressing die supporting block 45, and a second arm portion 53 which extends from an upper end portion of the first arm portion 52 in the radial direction of the pressing die supporting block 45.

The expansion and contraction mechanism 51 is configured to be capable of expanding and contracting an entire length. Specifically, the expansion and contraction mechanism 51 may be configured of a feed screw mechanism, which is a ball screw mechanism or a sliding screw mechanism, a hydraulic cylinder, and the like. In this example, the expansion and contraction mechanism 51 is configured of a hydraulic cylinder that extends and contracts the entire length in response to supply and discharge of hydraulic oil. More specifically, the expansion and contraction mechanism 51 includes a cylinder 54 and a piston 55 fitted in the cylinder 54.

The cylinder 54 is supported by a frame 56 of the staking device 38 (refer to FIGS. 3A and 3B) to be swingable about an swing axis α that is disposed parallel to the reference axis C.

A tip end portion of the piston 55 is supported by a tip end portion of the second arm portion 53 to be rotatable about a pivot axis β that is disposed parallel to the reference axis C.

In the orbital angle changing actuator 47 of this example, when hydraulic oil is supplied to or discharged from the cylinder 54, the cylinder 54 swings about the swing axis α, while the entire length of the expansion and contraction mechanism 51 expands or contracts. As the entire length of the expansion and contraction mechanism 51 expands and contracts, the second arm portion 53 of the link member 50 is pushed and pulled, thereby causing the pressing die supporting block 45 to rotate about the orbital angle changing axis O₄₅. Thus, in a cross section relative to a virtual plane including the reference axis C and the rotation axis R, a distance in the radial direction between the bearing center O₄₆ of the aligning bearing 46 and the reference axis C is changed, and the orbital angle θ is adjusted to a desired angle.

The main shaft drive mechanism 41 drives the pressing die support mechanism 40 to rotate about the reference axis C. Specifically, the main shaft drive mechanism 41 uses the electric motor 81 as a drive source (a first drive source) to drive the pressing die supporting block 45 to rotate about the reference axis C. The main shaft drive mechanism (the first mechanism) 41 performs a relative rotation between the workpiece 90 and the pressing die 39 of which the central axis is inclined with respect to the reference axis C, centering on the reference axis C. In this example, the main shaft drive mechanism 41 includes a main shaft 57 and the electric motor 81.

The main shaft 57 is supported to be rotatable about the reference axis C. In this example, the main shaft 57 has a cylindrical shape and is rotatably supported by a plurality of radial bearings 58 with respect to the frame 56 that does not rotate or move during operation of the staking device 38.

The main shaft 57 has the block holding recessed portion 59 having a cylindrical inner circumferential surface centered on the central axis O₅₉ disposed parallel to the reference axis C. The block holding recessed portion 59 opens at least to one of side surfaces on the both axial sides of the main shaft 57 that is closer to the hub unit bearing 2, which is the workpiece, set in the staking device 38. Inside the block holding recessed portion 59, the pressing die supporting block 45 is supported via the plurality of radial bearings 48 to be rotatable about the orbital angle changing axis O₄₅ which is its own central axis.

In this example, the block holding recessed portion 59 is configured of a through hole that opens onto the both axial side surfaces of the main shaft 57. In another example, the block holding recessed portion may be configured of a bottomed hole that opens only on one of the both axial side surfaces of the main shaft that is closer to the workpiece set in the staking device.

The electric motor 81 rotates the main shaft 57 directly or via a reducer.

The staking device 38 further includes a support base (a support portion, a holder) 60 that supports the workpiece, that is, the hub unit bearing 2 to enable relative movement in the axial direction of the reference axis C with respect to the pressing die 39.

The support base 60 supports the hub unit bearing 2 without any rattling in the radial direction in a state in which a central axis O thereof coincides with the reference axis C, the inner side thereof in the axial direction faces upward, and the outer side thereof in the axial direction faces downward. In this example, the support base 60 has a recessed portion 61 that opens to an upper surface thereof. The hub unit bearing 2 is supported by the support base 60 by fitting the pilot portion 14 of the hub 5 into the recessed portion 61 without any rattling in the radial direction.

In this example, the support base 60 is supported to be movable in the up-down direction, which is the axial direction of the reference axis C, with respect to the frame 56, and is movable in the up-down direction by a hydraulic mechanism. In another example, the support base that supports the hub unit bearing may be supported to be unable to move in the axial direction of the reference axis, and the pressing die may be moved in the axial direction of the reference axis by a hydraulic mechanism.

The staking device 38 of this example further includes an outer ring drive mechanism 62 that drives the outer ring 4 of the hub unit bearing 2 to rotate with respect to the hub body 17a and the inner ring 16.

The outer ring drive mechanism 62 uses an electric motor (not shown) as a drive source to drive the outer ring 4 to rotate. There is no particular limitation on the structure of the outer ring drive mechanism 62. For example, the outer ring drive mechanism 62 may be configured to drive a jig supported and fixed to the stationary flange 8 to rotate by an electric motor via a reducer.

### <Staking method>

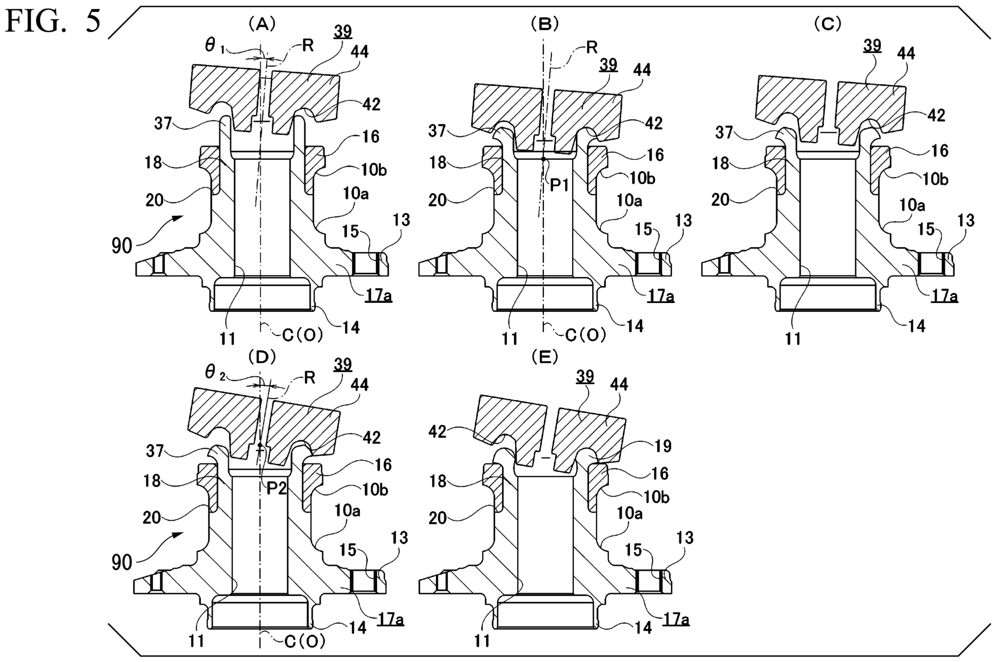

A specific method for plastically deforming the cylindrical portion 37 to form the staked portion 19 using the staking device 38 of this example will be described using FIGS. 5A to 5E in addition to FIGS. 2 to 4B(b).

First, in the external fitting step, the outer ring 4 and the plurality of rolling elements 6a and 6b are disposed around the hub body 17a, and then the inner ring 16 is inserted between the rolling elements 6b in row on the inner side in the axial direction and the fitting shaft portion 18.

In addition, an arrangement step is performed in which the hub body 17a, which is the first member, is disposed so that the central axis O of the hub body 17a is coaxial with the reference axis C. In this example, by fitting the pilot portion 14 of the hub 5 into the recessed portion 61 without any rattling in the radial direction, the hub unit bearing 2 is supported on the support base 60 without any rattling in the radial direction in a state in which the central axis O thereof coincides with the reference axis C, the inner side thereof in the axial direction faces upward, and the outer side thereof in the axial direction faces downward.

There is no particular limitation to the order in which the external fitting step and the arrangement step are performed. For example, the outer ring 4 and the plurality of rolling elements 6a and 6b are disposed around the hub body 17a, the inner ring 16 is fitted onto the fitting shaft portion 18, and then the hub unit bearing 2 before the staked portion 19 is formed may be set on the support base 60. Alternatively, after the hub body 17a is set on the support base 60, the outer ring 4 and the plurality of rolling elements 6a and 6b may be disposed around the hub body 17a, and the inner ring 16 may be fitted onto the fitting shaft portion 18.

Next, the first molding step is performed in which the cylindrical portion 37 is plastically deformed radially outward. In the first molding step, in a state in which the rotation axis R is inclined at a predetermined first angle θ₁ with respect to the reference axis C, the pressing die 39 is rotated about the reference axis C, while the pressing die 39 is pressed against the cylindrical portion 37 of the hub body 17a.

Specifically, in this example, the orbital angle θ, which is the inclination angle of the rotation axis R with respect to the reference axis C, is adjusted to the predetermined first angle θ₁ by driving the pressing die supporting block 45 to rotate about the orbital angle changing axis O₄₅ using the orbital angle changing actuator 47 of the pressing die support mechanism 40 (refer to FIG. 5A).

The first angle θ₁ may be set to be greater than or equal to 1° and less than 10°, preferably greater than or equal to 3° and less than 10°, and more preferably greater than or equal to 5° and less than 10°. In this example, the first angle θ₁ is set to 5°. The above values are merely examples and the present invention is not limited thereto.

Next, the support base 60 is raised so that a part of the processing surface portion 42 of the pressing die 39 in the circumferential direction comes into contact with a part of the cylindrical portion 37 of the hub body 17a in the circumferential direction. Then, an upward load is applied to the hub unit bearing 2 by the support base 60, and thus a part of the processing surface portion 42 in the circumferential direction is pressed against a part of the cylindrical portion 37 in the circumferential direction.
Furthermore, the pressing die supporting block 45 of the pressing die support mechanism 40 is driven to rotate about the reference axis C by the main shaft drive mechanism 41, and is thus driven to rotate about the pressing die 39. The pressing die 39 rotates (spins) about the rotation axis R on the basis of a frictional force acting on a contact portion between the processing surface portion 42 and an end portion (a first end portion) of the cylindrical portion 37 on the inner side in the axial direction. The rotation axis R, which is the central axis of the pressing die 39, whirls around the reference axis C like a trajectory of the central axis due to a precessional motion. A load directed axially and radially outward is applied to a part of the cylindrical portion 37 in the circumferential direction, the portion to which the load is applied changes continuously in the circumferential direction, and thus the cylindrical portion 37 is plastically deformed gradually.

The number of rotations (rotation speed) of the pressing die 39 about the reference axis C in the first molding step may be, for example, 50 min⁻¹ or more and 500 min⁻¹ or less, preferably 100 min⁻¹ or more and 500 min⁻¹ or less, and more preferably 200 min⁻¹ or more and 500 min⁻¹ or less. The above values are merely examples and the present invention is not limited thereto.

Further, a processing load in the first molding step (a pressing load of the pressing die 39 against the cylindrical portion 37) may be, for example, 10 kN or more and 200 kN or less, preferably 30 kN or more and 150 kN or less, and more preferably 50 kN or more and 150 kN or less. The above values are merely examples and the present invention is not limited thereto.

When the cylindrical portion 37 is plastically deformed to a certain extent, a gap between a metal material constituting the hub body 17a and the processing surface portion 42 becomes large enough to prevent vibration (rattling) of the hub body 17a regardless of a radial force applied from the pressing die 39 (refer to FIG. 5B), the first molding step is terminated and a transition is made to the next second molding step.

A timing to end the first molding step may be determined by any means. For example, the timing to end the first molding step may be determined on the basis of a relationship, which has been determined in advance through experiments, between an amount of plastic deformation of the cylindrical portion 37, an elapsed time from start of processing, and a current value of the electric motor 81 for rotating the pressing die 39 about the reference axis C.

In the second molding step, in a state in which the rotation axis R is inclined at a second angle θ₂, which is larger than the first angle θ₁, with respect to the reference axis C, the pressing die 39 is rotated about the reference axis C, while being pressed against the cylindrical portion 37 of the hub body 17a to further deform the cylindrical portion 37, thereby forming the staked portion 19.

In this example, after the first molding step is ended, first, the rotational drive of the pressing die 39 about the reference axis C by the main shaft drive mechanism 41 is stopped. Next, the support base 60 is lowered so that the processing surface portion 42 of the pressing die 39 and the cylindrical portion 37 of the hub body 17a are separated from each other, as shown in FIG. 5C. In this state, the orbital angle θ is changed to the predetermined second angle θ₂ by driving the pressing die supporting block 45 to rotate about the orbital angle changing axis O₄₅ by the orbital angle changing actuator 47 of the pressing die support mechanism 40 (refer to FIG. 5D). That is, a step of temporarily separating the pressing die 39 from the workpiece 90 (the hub body 17a) is provided between the first molding step (the first relative rotation) and the second molding step (the second relative rotation). In the separating step, the pressing state (the load) against the workpiece 90 (the hub body 17a) is temporarily released. The orbital angle changing actuator (a second mechanism) 47 changes the inclination angle θ of the central axis of the pressing die 39 with respect to the reference axis C. Specifically, the orbital angle θ is increased by rotating the pressing die supporting block 45 about the orbital angle changing axis O₄₅ and thus increasing a distance in the radial direction between the reference axis C and the bearing center O₄₆ of the aligning bearing 46 in a cross section relative to a virtual plane including the reference axis C and the rotation axis R.

The second angle θ₂ can be set to 10° or more and 30° or less, preferably 10° or more and 20° or less, and more preferably 15° or more and 20° or less. In this example, the second angle θ₂ is set to 15°. The above values are merely examples and the present invention is not limited thereto.

After the orbital angle θ is changed to the second angle θ₂, the support base 60 is raised again so that a part of the processing surface portion 42 of the pressing die 39 in the circumferential direction comes into contact with a part of the cylindrical portion 37 of the hub body 17a in the circumferential direction. At this time, a position of the hub unit bearing 2 in the axial direction with respect to the pressing die 39 (a position of the support base 60 in the up-down direction in this example) is adjusted so that a contact surface pressure between the processing surface portion 42 and the cylindrical portion 37 does not become excessively large. In the adjustment, the positions in the axial direction of a center (a point of the first inclination angle) P1 of the first angle (the first inclination angle) θ₁ in the first molding step and a center (a point of the second inclination angle) P2 of the second angle (the second inclination angle) θ₂ in the second molding step are set to be different from each other.

Specifically, for example, the position of the hub unit bearing 2 in the axial direction with respect to the pressing die 39 is adjusted so that a distance between an intersection point P2 of the reference axis C and the rotation axis R at the start of the second molding step and the end portion (the second end portion) of the hub body 17a on the other side in the axial direction (on the outer side in the axial direction) becomes larger than a distance between an intersection portion P1 of the reference axis C and the rotation axis R and the end portion (the second end portion) of the hub body 17a on the other side in the axial direction at the end of the first molding step. A center (a point of the second inclination angle) of the second angle (the second inclination angle) θ₂ is located axially outward compared to a center (a point of the second inclination angle) of the first angle (the first inclination angle) θ₁ in the vicinity of the end portion (near the first end portion) of the workpiece 90 (the hub body 17a) at which the staked portion is provided. A distance in the axial direction between the center (the point of the second inclination angle) P2 of the second angle (second inclination angle) θ₂ and the second end portion in the second molding step (FIG. 5B) is larger than a distance in the axial direction between the center (the point of the first inclination angle) P1 of the first angle (the first inclination angle) θ₁ and the second end portion in the first molding step (FIG. 5D). In other words, regarding a positional relationship with the hub unit bearing 2 which is an assembly of the first member and the second member, the position of the hub unit bearing 2 in the axial direction with respect to the pressing die 39 is adjusted so that the intersection point P2 between the reference axis C and the rotation axis R at the start of the second molding step is located on one side (the upper side in this example) in the axial direction with respect to the intersection point P1 between the reference axis C and the rotation axis R at the end of the first molding step.

The position of the hub unit bearing 2 in the axial direction with respect to the pressing die 39 at the start of the second molding step may be determined in advance by experiment or by calculation on the basis of values of the first angle θ₁, the second angle θ₂, and the like.

After the processing surface portion 42 and the cylindrical portion 37 are brought into contact with each other, while a part of the processing surface portion 42 in the circumferential direction is pressed against a part of the cylindrical portion 37 in the circumferential direction, the pressing die supporting block 45 of the pressing die support mechanism 40 is rotated about the reference axis C by the main shaft drive mechanism 41, and thus the rotational drive about the pressing die 39 is performed. Thus, the rotation axis R of the pressing die 39 whirls around the reference axis C like a trajectory of the central axis due to a precessional motion. A load directed axially and radially outward is applied to a part of the cylindrical portion 37 in the circumferential direction, and the portion to which the load is applied changes continuously in the circumferential direction. The cylindrical portion 37 is further plastically deformed to form the staked portion 19 (refer to FIG. 5E).

The number of rotations of the pressing die 39 about the reference axis C in the second molding step may be the same as or different from the number of rotations of the pressing die 39 about the reference axis C in the first molding step. The number of rotations of the pressing die 39 about the reference axis C in the second molding step may be, for example, 50 min⁻¹ or more and 500 min⁻¹ or less, preferably 100 min⁻¹ or more and 500 min⁻¹ or less, and more preferably 200 min⁻¹ or more and 500 min⁻¹ or less. The above values are merely examples and the present invention is not limited thereto.

Furthermore, the processing load in the second molding step may be the same as or different from the processing load in the first molding step. The processing load in the second molding step may be, for example, 10 kN or more and 300 kN or less, preferably 50 kN or more and 300 kN or less, and more preferably 100 kN or more and 300 kN or less. The above values are merely examples and the present invention is not limited thereto.

A timing to end the second molding step may be determined by any means. For example, the timing to end the second molding step may be determined on the basis of a relationship, which has been determined in advance through experiments, between an amount of plastic deformation of the cylindrical portion 37 and an elapsed time from the start of processing or a current value of the electric motor 81 for rotating the pressing die 39 about the reference axis C.

In the first molding step (the first relative rotation), a load point (a load area) to which a load is applied from the pressing die 39 to the hub body (the first member) 17a changes in the circumferential direction on the cylindrical portion 37 (the staked portion 19) of the hub body 17a (orbital forging). In the first molding step, a load including a load component directed radially outward is applied to the hub body 17a by the orbital forging, particularly using a region on the inner side in the radial direction on the processing surface portion 42 of the pressing die 39, and a position at which the load is applied moves in the circumferential direction. A part of the hub body 17a is deformed radially outward.

In the second molding step (the second relative rotation), the load point (the load area) to which the load is applied from the pressing die 39 to the hub body (the first member) 17a also changes on the hub body 17a in the circumferential direction (orbital forging). In the second molding step, a load including a load component directed radially inward is applied to a portion of the hub body 17a on the outer side in the radial direction by orbital forging, particularly using a region on the outer side in the radial direction on the processing surface portion 42 of the pressing die 39, and the position at which the load is applied moves in the circumferential direction. A portion of the hub body 17a is deformed radially inward.

At least one of the movement, position and posture of the pressing die 39 is different between the first molding step and the second molding step. A position in the axial direction and/or a direction of the load differs between a first load point (a first load area) in the first relative rotation and a second load point (a second load area) in the second relative rotation. The shortest distance in the axial direction between the load point and the second end portion in the second molding step (the second relative rotation) is smaller than the shortest distance in the axial direction between the load point and the second end portion in the first molding step (the first relative rotation). In the second molding step, a force (a load that includes a component that is directed inward in the radial direction) is applied to the staked portion 19 from the radially outer side of the processing surface portion 42 of the pressing die 39 in a compressive direction in the axial direction and inward with respect to the radial direction. A part of a material of the staked portion 19 flows radially inward. Expansion of the inner ring 16 in the radial direction caused by the formation of the staked portion 19 is prevented or curbed. Cracks in the inner ring 16 caused by the formation of the staked portion 19 are prevented, variations in the preload are curbed, and/or rotational resistance (friction) against the outer ring is curbed.

In this example, in the first molding step and the second molding step, while the step of plastically deforming the cylindrical portion 37 is being performed, specifically while a processing load is being applied to the cylindrical portion 37 (the staked portion 19), the outer ring 4 is rotationally driven by the outer ring drive mechanism 62. Thus, the rolling elements 6a and 6b are caused to rotate and revolve, and formation of indentations on the outer ring raceways 7a and 7b and the inner ring raceways 10a and 10b that are caused by the plastic deformation of the cylindrical portion 37 is prevented.

In the method for manufacturing the hub unit bearing 2 of this example, the cylindrical portion 37 is plastically deformed to form the staked portion 19, thereby joining the hub body 17 and the inner ring 16, and then the hub-side face spline 12 is formed on the end surface of the staked portion 19 on the inner side in the axial direction.

The method for forming the hub-side face spline 12 is not particularly limited. For example, the hub-side face spline 12 may be formed by a general forging press process in which a processing portion having concave portions and convex portions alternately disposed in the circumferential direction is pressed against the staked portion 19. Alternatively, the hub-side face spline 12 may be formed by orbital forging in which a molding die supported to be rotatable about a central axis that is inclined with respect to the central axis O of the hub unit bearing 2 is pressed against the staked portion 19 while being rotated about the central axis O of the hub unit bearing 2.

In this example, in the first molding step which is an initial stage of the process for forming the staked portion 19, in a state in which the orbital angle θ of the pressing die 39 is set to a relatively small first angle θ₁, the pressing die 39 performs an orbital staking process on the cylindrical portion 37, thereby causing the plastic deformation. Therefore, in the initial stage of the process for forming the staked portion 19, the hub body 17a (the hub unit bearing 2) is prevented from vibrating (rettling), and a decrease in processing accuracy is prevented.

In the first molding step, the cylindrical portion 37 is plastically deformed to a certain extent, and then in the second molding step, in a state in which the orbital angle θ of the pressing die 39 is set to a relatively large second angle θ₂, the pressing die 39 performs a orbital staking process on the cylindrical portion 37 to further plastically deform the cylindrical portion 37, thereby forming the staked portion 19. Therefore, during the process of forming the staked portion 19 from a middle state to a final stage, the load applied from the pressing die 39 to the cylindrical portion 37 (the staked portion 19) is prevented from becoming unnecessarily large. Thus, the expansion of the inner ring 16 to the outer side in the radial direction can be curbed, and occurrence of hoop stress within the inner ring 16 can be prevented or the hoop stress occurring within the inner ring 16 can be curbed to a small value.

In particular, in this example, the first molding step in which the orbital staking process is performed with the orbital angle θ set to a relatively small first angle θ₁, and the second molding step in which the orbital staking process is performed with the orbital angle θ set to a relatively large second angle θ₂ are performed using the same pressing die 39. Specifically, after the first molding step is performed by the staking device 38, the orbital angle θ of the pressing die 39 of the staking device 38 is changed and then the second molding step is performed. In short, the first molding step and the second molding step, which have different orbital angles θ, are performed by one staking device 38. Therefore, a manufacturing line of the hub unit bearing 2 is prevented from being unnecessarily lengthened, making it easy to reduce costs.

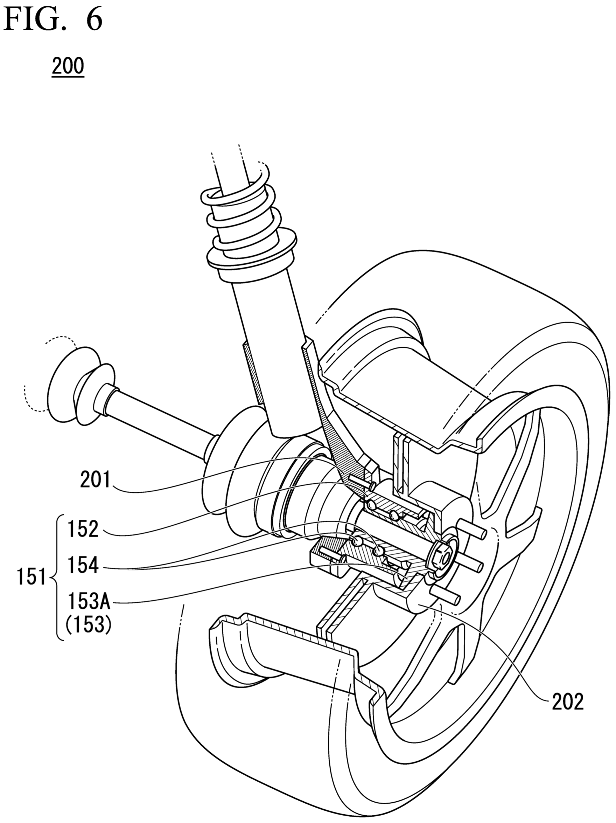

FIG. 6 is a partial schematic diagram of a vehicle 200 equipped with a hub unit bearing (a bearing, a bearing device) 151. The above-described bearing may be applied to both a hub unit bearing for a driving wheel and a hub unit bearing for a driven wheel. In FIG. 6, the hub unit bearing 151 is for a driving wheel and includes an outer ring 152, a hub 153, and a plurality of rolling elements 156. The outer ring 152 is fixed to a knuckle 201 of a suspension device using bolts or the like. A wheel 202 (and a braking rotor 22) is fixed to a flange (a rotating flange) 153A provided on the hub 153 using bolts or the like. Furthermore, the vehicle 200 may have a support structure similar to that described above for the hub unit bearing 151 for a driven wheel.

The technical scope of the present invention is not limited to the scope described in the embodiment. Various modifications and improvements can be made to the embodiments. Such modifications or improvements may also be included within the technical scope of the present invention. Furthermore, the present invention is not limited to the embodiment described above and may be any combination of these configurations.

The present disclosure includes the following configurations and/or combinations.

In one aspect, a staking method includes a step of setting a workpiece, in which a first member and a second member are assembled in the axial direction, along a reference axis, and a step of forming a staked portion on the first member. The step of forming the staked portion includes deforming the first member using a first relative rotation about the reference axis between a first pressing die and the workpiece, and further deforming the first member using a second relative rotation about the reference axis between a second pressing die and the workpiece. In the first relative rotation, a central axis of the first pressing die is inclined at a first inclination angle with respect to the reference axis. In the second relative rotation, a central axis of the second pressing die is inclined at a second inclination angle, which is different from the first inclination angle, with respect to the reference axis.

In the staking method according to the above aspect, positions in the axial direction between a center of the first inclination angle and a center of the second inclination angle are different.

In the staking method according to the above aspect, the center of the second inclination angle is located outward in the axial direction compared to the center of the first inclination angle in the vicinity of an end portion of the first member at which the staked portion is provided.

In the staking method according to the above aspect, the first pressing die and the second pressing die are the same pressing die, or different pressing dies from each other.

In the staking method according to the above aspect, the first pressing die and the second pressing die are the same pressing die, and the method further includes a step of temporarily separating the first pressing die from the workpiece between the first relative rotation and the second relative rotation.

In another aspect, a method for manufacturing a hub unit bearing manufactures a hub unit bearing using the above-described staking method.

In still another aspect, a method for manufacturing a vehicle includes manufacturing a hub unit bearing using the manufacturing method described above, and assembling a vehicle using the hub unit bearing.

In yet another aspect, a method for manufacturing a mechanical device includes manufacturing a staked assembly using the staking method described above and assembling a mechanical device using the staked assembly.

In still yet another aspect, a staking device includes a reference axis, a holder which supports a workpiece, a pressing die having a central axis, a first mechanism which performs a relative rotation between the workpiece and the pressing die of which the central axis is inclined with respect to the reference axis, about the reference axis, and a second mechanism that changes an inclination angle of the central axis with respect to the reference axis. In the first relative rotation, the central axis of the pressing die is inclined at a first inclination angle with respect to the reference axis. In the second relative rotation, the central axis of the pressing die is inclined at a second inclination angle different from the first inclination angle with respect to the reference axis.

In the staking device according to the above aspect, positions in the axial direction between a center of the first inclination angle and a center of the second inclination angle are different from each other.

In the staking device according to the above aspect, the first mechanism has a first drive source, and the second mechanism has a second drive source different from the first drive source.

In the staking device according to the above aspect, the pressing die includes a first pressing die used for the first relative rotation and a second pressing die used for the second relative rotation, and the first pressing die and the second pressing die are the same pressing die or are different pressing dies from each other.

In still yet another aspect, a staking method includes an external fitting step of fitting a second member having a cylindrical shape onto a first member having a cylindrical portion at an end portion thereof on one side in the axial direction, a first molding step, and a second molding step. In the first molding step, the cylindrical portion is plastically deformed by rotating the first pressing die, which is supported to be rotatable about a first rotation axis that is the central axis thereof, about the central axis of the first member while the first pressing die is pressed against an end portion of the cylindrical portion on one side in the axial direction in a state in which the first rotation axis is inclined at a predetermined first angle with respect to the central axis of the first member. In the second molding step, after the first molding step, a staked portion which presses an end surface of the second member on one side in the axial direction is formed by rotating the second pressing die, which is supported to be rotatable about a second rotation axis that is the central axis thereof, about the central axis of the first member while the second pressing die is pressed against the end portion of the cylindrical portion on the one side in the axial direction to further plastically deform the cylindrical portion in a state in which the second rotation axis is inclined at a predetermined second angle larger than the first angle with respect to the central axis of the first member.

In the staking method according to the above aspect, the first pressing die and the second pressing die may be the same. That is, the first molding step and the second molding step may be performed using the same device.

In the staking method according to the above aspect, a distance between an intersection point of the central axis of the first member and the second rotation axis and the end portion of the first member on the other side in the axial direction at the start of the second molding step may be made larger than a distance between an intersection point of the central axis of the first member and the first rotation axis and the end portion of the first member on the other side in the axial direction at the end of the first molding step.

The staking method according to the above aspect may further include, after the second molding step, a spline forming step of forming a face spline formed by arranging concave portions and convex portions alternately in the circumferential direction on an end surface of the staked portion on one side in the axial direction.

In the staking method according to the above aspect, the first angle may be greater than or equal to 3° and less than 10°, and the second angle may be greater than or equal to 10° and less than or equal to 30°.

In still yet another aspect, a hub unit bearing that is a target object of the method for manufacturing a hub unit bearing includes an outer ring having a plurality of outer ring raceways on an inner circumferential surface thereof, a hub having a plurality of inner ring raceways on an outer circumferential surface thereof, and a plurality of rolling elements disposed in each row between the plurality of outer ring raceways and the plurality of inner ring raceways.

The hub includes an inner ring having at least the innermost inner ring raceway in the axial direction among the plurality of inner ring raceways on an outer circumferential surface thereof, and a hub body having a fitting shaft portion onto which the inner ring is fitted and a staked portion provided at an end portion on the inner side in the axial direction and pressing against an end surface of the inner ring on the inner side in the axial direction.

In one aspect, in the method for manufacturing a hub unit bearing, the hub body and the inner ring are joined together by the staking method according to one aspect of the present disclosure. In this case, the first member is configured of the hub body, and the second member is configured of the inner ring.

In the method for manufacturing a hub unit bearing in the above aspect, the outer ring can be rotationally driven relative to the hub body and the inner ring throughout the process of forming the staked portion.

In another aspect, a vehicle that is a target object of the method for manufacturing a vehicle includes a hub unit bearing.

In one aspect, in a method for manufacturing a vehicle, the hub unit bearing is manufactured by the method for manufacturing a hub unit bearing according to one aspect of the present disclosure.

In another aspect, a mechanical device that is a target object of the method for manufacturing a mechanical device includes a first member and a second member fitted onto the first member, and a staked portion provided at one end portion of the first member prevents the second member from displacing to one side in the axial direction with respect to the first member.

In one aspect, in the method for manufacturing a mechanical device, the first member and the second member are joined by the staking method according to one aspect of the present disclosure.

In another aspect, the staking device includes a pressing die, a pressing die support mechanism that supports the pressing die so that an inclination angle of a rotation axis, which is a central axis of the pressing die, with respect to a reference axis can be adjusted and the pressing die can rotate about the rotation axis, and a main shaft drive mechanism that drives the pressing die support mechanism to rotate about the reference axis.

The staking device in the above aspect may further include a support base that supports a workpiece to allow relative movement in the axial direction of the reference axis with respect to the pressing die.

In the staking device according to the above aspect, the pressing die support mechanism includes a pressing die supporting block which has a pressing die supporting recessed portion formed in a direction inclined with respect to the reference axis and is supported to be rotatable about an orbital angle changing axis disposed parallel to the reference axis, an aligning bearing disposed between the pressing die and the pressing die supporting recessed portion, and an orbital angle changing actuator which drives the pressing die supporting block to rotate about the orbital angle changing axis.

In the staking device according to the above aspect, the main shaft drive mechanism includes a main shaft that has a block holding recessed portion which is formed in an axial direction of the reference axis at a portion thereof that deviates in the radial direction from the reference axis and in which the pressing die supporting block is supported, and that is supported to be rotatable about the reference axis, and an electric motor that rotates the main shaft.

### REFERENCE SIGNS LIST

1 Wheel drive unit
2 Hub unit bearing
3 Constant velocity joint
4 Outer ring
5 Hub
6a, 6b Rolling element
7a, 7b Outer ring raceway
8 Stationary flange
9 Flange-side support hole
10a, 10b Inner ring raceway
11 Central hole
12 Hub-side face spline
13 Rotating flange
14 Pilot portion
15 Mounting hole
16 Inner ring
17a, 17b Hub body
18 Fitting shaft portion
19 Staked portion
20 Stepped surface
21a, 21b Cage
22 Joint outer ring
23 Joint inner ring
24 Ball
25 Joint-side face spline
26 Mouth portion
27 Cylindrical portion
28 Circumferential wall portion
29 Side wall portion
30 Outer diameter-side engagement groove
31 Female thread portion
32 Inner diameter-side engagement groove
33 Spline hole
34 Bolt
35 Shaft portion
36 Head portion
37 Cylindrical portion
38 Staking device
39 Pressing die
40 Pressing die support mechanism
41 Main shaft drive mechanism
42 Processing surface portion
43 Shaft member
44 Pressing die body
45 Pressing die supporting block
46 Aligning bearing
47 Orbital angle changing actuator
48 Radial bearing
49 Pressing die supporting recessed portion
50 Link member
51 Expansion and contraction mechanism
52 First arm portion
53 Second arm portion
54 Cylinder
55 Piston
56 Frame
57 Main shaft
58 Radial bearing
59 Block holding recessed portion
60 Support base
61 Recessed portion
62 Outer ring drive mechanism

## Claims

1. A staking method comprising:
setting a workpiece, in which a first member and a second member are assembled in an axial direction, along a reference axis; and
forming a staked portion in the first member, the forming of the staked portion including deforming the first member using a first relative rotation about the reference axis between a first pressing die and the workpiece, and further deforming the first member using a second relative rotation about the reference axis between a second pressing die and the workpiece,
wherein in the first relative rotation, a central axis of the first pressing die is inclined at a first inclination angle with respect to the reference axis, and
in the second relative rotation, a central axis of the second pressing die is inclined at a second inclination angle different from the first inclination angle with respect to the reference axis.

2. The staking method according to claim 1, wherein positions in the axial direction between a center of the first inclination angle and a center of the second inclination angle are different from each other.

3. The staking method according to claim 1 or 2, wherein the center of the second inclination angle is located outward in the axial direction in the vicinity of an end portion of the first member at which the staked portion is provided, compared to the center of the first inclination angle.

4. The staking method according to any one of claims 1 to 3, wherein the first pressing die and the second pressing die are the same pressing die or are different pressing dies.

5. The staking method according to any one of claims 1 to 3, wherein the first pressing die and the second pressing die are the same pressing die, and
the method further includes temporarily separating the first pressing die from the workpiece between the first relative rotation and the second relative rotation.

6. A method for manufacturing a hub unit bearing, comprising:
manufacturing a hub unit bearing using the staking method according to any one of claims 1 to 5.

7. A method for manufacturing a vehicle, comprising:
manufacturing a hub unit bearing using the manufacturing method according to claim 6; and
assembling a vehicle using the hub unit bearing.

8. A method for manufacturing a mechanical device, comprising:
manufacturing a staked assembly using the staking method according to any one of claims 1 to 5; and
assembling a mechanical device using the staked assembly.

9. A staking device comprising:
a holder configured to support a workpiece;
a pressing die having a central axis;
a first mechanism configured to perform relative rotation between the workpiece and the pressing die, of which the central axis is inclined with respect to the reference axis, about the reference axis; and
a second mechanism configured to change an inclination angle of the central axis with respect to the reference axis,
wherein in a first relative rotation, the central axis of the pressing die is inclined at a first inclination angle with respect to the reference axis, and in a second relative rotation, the central axis of the pressing die is inclined at a second inclination angle different from the first inclination angle with respect to the reference axis.

10. The staking device according to claim 9, wherein positions in an axial direction between a center of the first inclination angle and a center of the second inclination angle are different from each other.

11. The staking device according to claim 9 or 10, wherein the first mechanism has a first drive source, and
the second mechanism has a second drive source different from the first drive source.

12. The staking device according to any one of claims 9 to 11, wherein the pressing die includes a first pressing die used for the first relative rotation and a second pressing die used for the second relative rotation, and
the first pressing die and the second pressing die are the same pressing die or are different pressing dies.
